# EUROPEAN PATENT APPLICATION

(11) **EP 1 733 621 A2**
(43) Date of publication of application: **20.12.2006**
(21) Application number: 06010519.4
(22) Date of filing: 22.05.2006
(51) Int. Cl.: A23B 4/044

(54) **Tray assembly and methods**

(30) Priority: 23.05.2005 US 135784; 18.05.2006 US 383994
(71) Applicant: Schwan's Global Supply Chain, Inc., Marshall, MN 56258 (US)
(72) Inventor: Bjork, Chris, Lake Benton Minnesota 56149 (US); Rettey, David, Tracy Minnesota 56175 (US)
(74) Representative: Duxbury, Stephen

(57) **Abstract**

A single-use tray is useable to impart aromatic material to food upon the application of heat. The tray assembly (10) is pre-filled with aromatic material, such as wood chips, spices, herbs, or natural or artificial flavorings. The tray assembly includes a first tray (16) with a base (18) and a second tray (28) non-removably secured to the first tray over the base and over the volume of aromatic material (24). The second tray has a cooking surface (36) defining an aperture arrangement to permit the flow of gases from the aromatic material through the cooking surface upon application of heat. A packaged food product includes the tray assembly (10) with prepackaged food (52) and an outer protective covering or wrapper (54). Some arrangements include a lid that defines a chamber for enhancing flavor. Methods of making a tray, packaging food, and using are provided.

## Description

### TECHNICAL FIELD

This disclosure concerns a package, such as a tray useable to impart aromatic material through a cooking surface on application of heat. One example embodiment in this disclosure is a single-use pre-filled smoker tray.

### BACKGROUND

Smoking food using wood chips imparts a particularly appealing taste to meat and other food that is desired by many people. Barbeque grills present an opportunity for smoking food because they are generally used in an outdoor environment where the smoke is not an issue. Vented indoor grills and broilers can also be used to impart a smoked flavor to the food.

In addition to a smoke flavor, other aromatic materials can sometimes be infused into food through the application of heat. Such aromatic material can be spices, herbs, natural flavorings, artificial flavorings, or mixtures of any of these.

Smokers for cooking and smoking food are known. With many of these products, they are inconvenient to set up and can be messy and a hassle to clean. Improvements are desirable.

### SUMMARY

This disclosure is directed to a single-use tray useable to impart aromatic material to food upon the application of heat. To achieve the advantages and in accordance with the purposes as embodied and broadly described herein, a single-use pre-filled tray assembly is provided. The single-use pre-filled tray assembly includes a first tray having a base with a heating surface; a volume of an aromatic material positioned on the base of the first tray; and a second tray non-removably secured to the first tray over the base and the volume of aromatic material. The second tray has a cooking surface, and the cooking surface defines an aperture arrangement to permit the flow of gases from the aromatic material through the cooking surface upon application of heat to the heating surface of the first tray.

Preferably, the second tray includes a wall surrounding the cooking surface, and the second tray is nested within the first tray.

Preferably, the second tray wall is non-removably connected to a surrounding wall of the first tray. In some arrangements, the second tray wall is crimped to the surrounding wall of the first tray.

In some embodiments, the aromatic material comprises wood chips. In other embodiments, the aromatic material comprises spices or herbs or mixtures thereof. In other embodiments, the aromatic material comprises natural or artificial flavorings or mixtures thereof.

In one arrangement, the tray assembly is disposable, with the first tray and second tray each comprising foil trays.

In another aspect, this disclosure describes a packaged food product comprising a first tray; a volume of an aromatic material positioned in the first tray; a second tray non-removably secured to the first tray over the volume of aromatic material; the second tray having a cooking surface, with the cooking surface defining an aperture arrangement to permit the flow of gases from the aromatic material through the cooking surface upon application of heat to the first tray; a food product oriented on the cooking surface of the second tray; and a removable packaging cover trapping the food product on the second tray.

In one arrangement, the food product includes any one of vegetables, proteins, and combinations thereof.

In another aspect, a method of making a tray assembly is provided. The method includes placing an aromatic material in a first tray; orienting a second tray over the aromatic material in the first tray, the second tray having a cooking surface defining an aperture arrangement therein; and securing the second tray to the first tray to ensure the first tray and second tray are non-separable.

In one arrangement, the step of securing includes crimping together a side wall of the first tray and a side wall or crimping flange of the second tray.

In another aspect, a method of packaging a food product is provided. The method includes placing an aromatic material in a first tray; orienting a second tray over the aromatic material in the first tray, the second tray having a cooking surface defining an aperture arrangement therein; securing the second tray and first tray together; orienting a food product on the cooking surface of the second tray; and orienting a removable and disposable cover over the food product to trap the food product against the cooking surface.

In another aspect, a method of flavoring a food product is provided. The method includes placing a food product onto a cooking surface of a single-use tray assembly. The cooking surface defines an aperture arrangement therethrough. The tray assembly includes a base arrangement under the cooking surface and an aromatic material being within the base arrangement. The method includes heating the tray assembly to heat the aromatic material and cause the aromatic material to give off fumes; allowing the fumes to flow through the aperture arrangement in the cooking surface to the food product on the cooking surface; removing the food product from the cooking surface; and discarding the single-use tray assembly.

It is to be understood that both the foregoing general description and the following detailed description are exemplary and explanatory only and are not restrictive of the invention, as claimed.

### BRIEF DESCRIPTION OF THE DRAWINGS

FIG. 1 is a perspective view of one embodiment of a tray assembly made in accordance with principles of this disclosure being used on a grill;
FIG. 2 is a schematic, cross-sectional view of the tray assembly depicted in FIG. 1;
FIG. 3 is a cross-sectional view of a packaged food product utilizing the tray assembly of FIGS. 1 and 2;
FIG. 4 is a schematic, cross-sectional view of the tray depicted in FIG. 2, and including a cover arrangement;
FIG. 5 is a schematic, cross-sectional view of an alternative embodiment of a tray assembly;
FIG. 6 is a schematic, cross-sectional view of another embodiment of a tray assembly; and
FIG. 7 is a schematic, cross-sectional view of yet another embodiment of a tray assembly.

### DETAILED DESCRIPTION

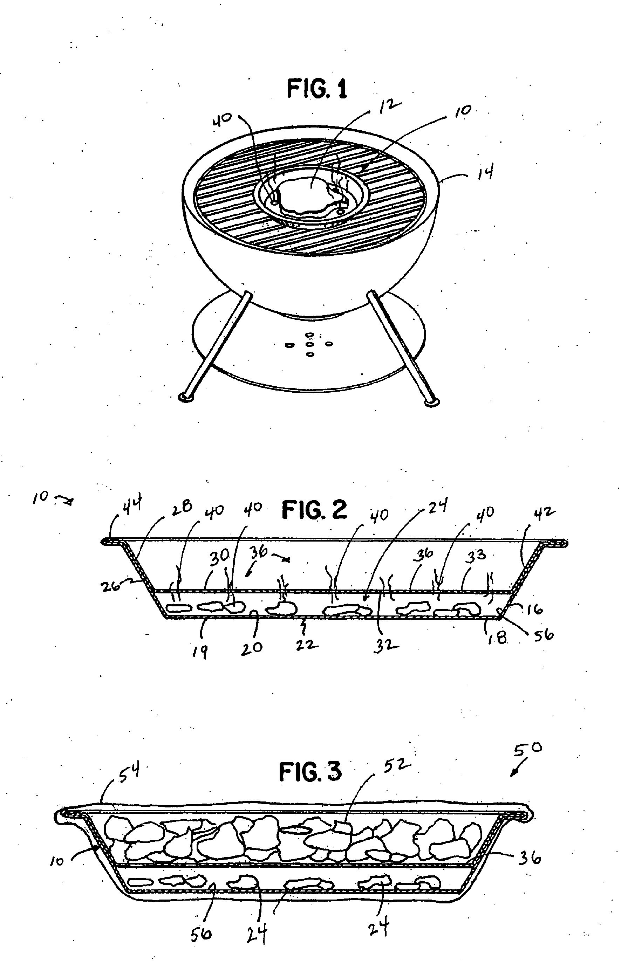

FIG. 1 illustrates a tray assembly 10 being used to cook food 12 on a grill 14. The tray assembly 10 is illustrated in FIG. 1 being used on grill 14, and it should be understood that the tray assembly 10 can be used for a variety of cooking methods including on a stove top, in a broiler, baked in an oven, or on an indoor grill.

FIG. 2 illustrates a schematic cross-sectional view of one embodiment of the tray assembly 10. Preferably, the tray assembly 10 is a "single-use" tray assembly. By the term "single-use", it is meant that after normal cooking and preparation of food using the tray assembly 10, the tray assembly 10 is disposed of. The tray assembly 10 can be used as a serving tray or plate to immediately consume the food prepared upon it, but by "single-use" it is meant that the tray assembly 10 would not be cleaned, stored, and brought out for later use to cook and prepare food after already having done so once. To be a single-use tray assembly 10, in general, the tray assembly 10 will be made from inexpensive and easily disposable materials. These materials can include aluminum, plastic, or blends or composites thereof. For example, the tray assembly 10 can be made from aluminum pans, or foil pans, such as pie tins or turkey pans.

In general, the tray assembly 10 includes a first tray. As embodied herein, a first tray 16 is provided and includes a base 18. The base 18 has first and second opposite surfaces 19, 20. The first surface 19 functions as a heating surface 22. That is, normally the heating surface 22 is oriented to be either in direct contact with or above or adjacent to a heat source. The second surface 20 is on an opposite side as the heating surface 22. The second surface 20 is oriented to hold a volume of an aromatic material 24 positioned on the base 18 of the first tray 16.

Preferably, the tray assembly 10 is pre-filled. By the term "pre-filled", it is meant that the tray assembly 10 already has the aromatic material 24 positioned on the first tray 16 on the base 18 to use the tray assembly 10 for the preparation of food. There is no extra step of orienting the aromatic material 24 in the first tray 16 required, in preferred embodiments.

The aromatic material 24 can be many types of material used for the preparation of food 12. The aromatic material 24 can be wood, wood chips, water, or other material that is heated, smoked, incinerated, or burned to provide a flavoring or product change. Example aromatic materials 24 useable include spices or herbs or mixtures thereof. Other aromatic materials comprise natural or artificial flavorings or mixtures thereof. The material 24 can include solids, liquids, and mixtures thereof.

In the embodiment shown, the first tray 16 further includes a surrounding wall 26. The surrounding wall 26 extends from the base 18 and helps to hold or contain the aromatic material 24 within the base 18. The surrounding wall 26 can be orthogonal relative to the base 18 or can be angled therefrom.

In the embodiment shown in FIG. 1, the first tray 16 is illustrated as being round. In other embodiments, the first tray 16 can be other shapes including non-round, oval, rectangular, polygonal, or irregular.

In general, the tray assembly 10 includes a second tray non-removably secured to the first tray. As embodied herein, the tray assembly 10 includes second tray 28 non-removably secured to the first tray 16 over the base 18 and over the volume of aromatic material 24. In preferred embodiments, the second tray 28 is non-removably secured to the first tray 16. While it is contemplated that in certain alternative embodiments, the first tray 16 and second tray 28 are separable, preferred arrangements including the "non-removable" security of the second tray 28 and first tray 16. By the term "non-removably secured" and variants thereof, it is meant that the first tray 16 and second tray 28 cannot be separated from each other without bending, breaking, or damaging at least one of the first tray 16 and second tray 28.

In the embodiment illustrated in FIG. 2, the second tray 28 includes a second tray base 30 having first and second opposite surfaces 32, 33. The first surface 32 of the second tray base 30 faces the second surface 20 of the first tray base 18. The second surface 33 of the second tray base 30 defines a cooking surface 36. The cooking surface 36 is for supporting and being in contact with the food 12. The cooking surface 36 is illustrated as flat, but can include ribs, ripples, or other features to help cook the food 30 to create a certain effect.

In general, the cooking surface 36 defines an aperture arrangement to permit the flow of gases from the aromatic material through the cooking surface 36. As embodied herein, the cooking surface 36 defines aperture arrangement 36 in the form of spaced holes 40 that permit the flow of gases from the aromatic material 24 through cooking surface 36 upon the application of heat, such as the application of heat to the heating surface 22 of the first tray 16. The holes 40 can be any type of aperture such as slots, narrow slits, round holes, irregular shaped holes, punctures, etc.

Still in reference to FIG. 2, the second tray 28, in the embodiment shown, includes a wall 42 circumscribing or surrounding the cooking surface 36. In the embodiment shown, the wall 42 is angled relative to the cooking surface 36. The wall 42 can be orthogonal, or, as in the embodiment shown, can be angled obliquely depicted in FIG. 2 as obtusely, relative to the cooking surface 36. By the term "obliquely", it is meant that the second tray wall 42 is non-orthogonally angled relative to the cooking surface 36, in the embodiment shown.

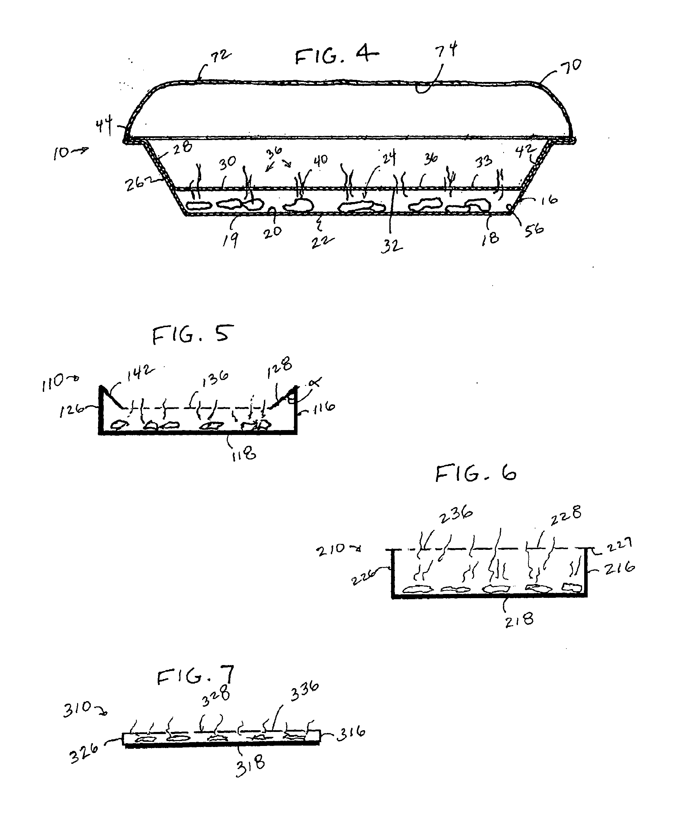

FIGS. 5-7 illustrate alternative embodiments of the second tray 28 relative to the first tray 16. In the embodiment of FIG. 5, the tray assembly 110 includes first tray 116 and second tray 128. In the embodiment of FIG. 5, the second tray 128 includes wall 142 circumscribing or surrounding cooking surface 136. In the embodiment shown, the wall 142 is angled obliquely relative to the cooking surface 136, and is also spaced from the surrounding wall 126 of the first tray 116. In the embodiment shown in FIG. 5, the wall 142 is angled at an angle É from the surrounding wall 126. The angle É, in the embodiment depicted, is between 10 and 80 degrees, for example, about 45 degrees.

In the embodiment of FIG. 6, the tray assembly 210 includes second tray 228 that includes cooking surface 236. The cooking surface 236, in the embodiment shown, is straight and extends across an opening of the surrounding wall 226 of the first tray 216. The second tray 228, in the embodiment shown, has a flange or rim 227 that projects beyond the edge of the surrounding wall 226.

In FIG. 7, the tray assembly 310 is similar to the tray assembly 210 of FIG. 6, but is shallower than the arrangement of FIG. 6. The tray assembly 310 includes first tray 316 and second tray 328. The second tray 328 has a cooking surface 336 that is straight and extends across and over the surrounding wall 326. In the embodiment of FIG. 7, there is no flange extending beyond the surrounding wall 326.

Each of the embodiments of FIGS. 5-7, other than the differences with respect to the geometry of the first and second trays, can include the features described with respect to FIGS. 2-4. In addition, the embodiments of FIGS. 5-7 are usable with the methods described herein, as well. The purpose of FIGS. 5-7 is merely to illustrate alternative structures of the first tray and second tray. For example, in FIGS. 5-7, the first tray, in each embodiment, has the surrounding wall 126, 226, 326 arranged generally perpendicular to the base 118, 218, 318. The geometry of the second tray 128, 228, 328, is illustrated in a variety of arrangements different from the arrangement illustrated in FIGS. 2-4.

The tray assembly 10 depicted in FIG. 2 shows the second tray 28 as nested within the first tray 16. By term "nested", it is meant that the wall 42 of the second tray 28 is circumscribed or surrounded by the surrounding wall 26 of the first tray 16. In the embodiment shown, the wall 42 is against the wall 26.

As mentioned above, in preferred embodiments, the second tray 28 is non-removably connected to the first tray 16. As embodied herein, the second tray wall 42 is non-removably connected to the surrounding wall 26 of the first tray 16. This connection can be through a variety of means. Such means including seaming, tacking, metal fusion bonding, stapling, crimping, etc. In the particular embodiment illustrated, the first tray 16 is connected to the second tray 28 by a crimp connection 44 between the second tray wall 42 and the surrounding wall 26 of the first tray 16. Crimping flanges are also usable to connect the first and second trays 16, 28.

FIG. 3 illustrates one embodiment of a packaged food product 50 made in accordance with principles of this disclosure. In general, the packaged food product 50 will include the tray assembly 10 as described above. The packaged food product 50 includes the tray assembly 10 with the prepackaged food product 52 oriented on the cooking surface 36 of the second tray 28. The prepackaged food product 52 can include, for example, frozen vegetables, meat, or other proteins, pastas or other types of noodles, and a mixture or blend of any of these. The prepackaged food 52 can be itself contained within packaging, such as a plastic bag, when stored on the cooking surface 36. The packaged food product 50 will include some sort of outer protective, removable and disposable cover, such as wrapper 54. Wrapper 54 is shown enclosing the entire tray assembly 10 with the prepackaged food 52 held within the tray assembly 10. In other embodiments, the outer wrapper 54 may only extend across the top of the second tray 28 such that the surrounding wall 26 of the first tray 16 is exposed. The packaged food product 50 would include the aromatic material 24 already oriented within the volume 56 between the first surface 32 of the second tray base 30 and the second surface 20 of the base 18 of the first tray 16.

FIG. 4 illustrates the tray assembly 10 of FIG. 2 and including a removable cover 70. The cover 70 can have a variety of shapes, and in the embodiment shown, the cover 70 includes a lid 72 that defines a chamber 74. The chamber 74, in some applications, can improve or increase the flavor of the aromatic materials 24 by maintaining a longer exposure to the flavoring process. While the embodiment shown in FIG. 4 shows a lid 72 that is curved, in other embodiments, the lid 72 can be non-curved, or straight. The lid 72 can be completely removable from the tray assembly 10, or it can be secured to a portion of the first or second trays 16, 28, or both. The lid 72 is spaced from the cooking surface 36 to define chamber 74. The lid 72, in the embodiment shown, extends over the cooking surface 36 to cover it.

To use the packaged food product 50, the consumer would remove the wrapper 54 to expose the prepackaged food 52. If the prepackaged food 52 is also in a wrapper, that wrapper would be removed, and the prepackaged food 52 would be oriented on the cooking surface 36. The tray assembly 10 with the prepackaged food 52 would then be heated, such as placing it on a grill, in an oven, or on a stove top. When the prepackaged food 52 has been cooked to the desired level, the prepackaged food 52 can either be consumed directly from the tray assembly 10 (i.e., the tray assembly 10 is used as a serving tray), or it can be removed from the tray assembly 10 for serving. The entire tray assembly 10 is then discarded after its single use.

In accordance with principles of this disclosure, a method of making a tray assembly is provided. As embodied herein, the method includes placing an aromatic material in a first tray. The aromatic material can be material as described herein including wood, wood chips, water, spices, herbs, natural or artificial flavorings, and any other material that is heated, smoked, incinerated, or burned to provide a flavoring or product change. The first tray can be the type of tray described above, as embodied as tray 16.

Next, there is a step of orienting a second tray over the aromatic material in the first tray. The second tray has a cooking surface defining an aperture arrangement. One useable second tray would be the second tray 28 as described herein.

After the step of placing an aromatic material in the first tray and then orienting a second tray over the aromatic material in the first tray, the method includes a step of securing the second tray to the first tray to ensure that the first tray and second tray are non-separable. The step of securing can include, for example, crimping. In particular, a side wall of the first tray and a side wall of a second tray can be squeezed or crimped together in a way to prevent separation of the two trays. This step may also include crimping together crimping flanges on one or both of the two trays to prevent separation.

In accordance with principles of this disclosure, a method of packaging a food product is provided. The method includes a method of making a tray assembly, as described above. In addition, a food product is oriented on the cooking surface 36 of the second tray 28. The food product can be either oriented directly upon the cooking surface, or some sort of packaging or outer wrapper can be placed around the food product and then oriented on the cooking surface 36 of the second tray 28. Next, there is a step of orienting a removable and disposable cover over the food product to trap the food product in the volume defined by the second tray 28. For example, the disposable cover would be oriented to trap the food product against the cooking surface 36. In the example shown in FIG. 3, the outer wrapper 54 is enclosed around the entire tray assembly 10 and packaged food product 50. In other implementations, only a covering would be provided along the top of the tray assembly 10 to trap the packaged food product 50 against the cooking surface 36.

In accordance with principles of this disclosure, a method of flavoring a food product is provided. The method includes placing food, such as food 12, onto the cooking surface 36 of a single-use tray assembly, such as tray assembly 10. The cooking surface defines aperture arrangement 38 therethrough. The tray assembly 10 includes base arrangement 18 under the cooking surface 36 and aromatic material 24 within the base arrangement 18. Next, the tray assembly 10 is heated to heat the aromatic material 24 and cause the aromatic material 24 to give off gas, fumes, steam, a mist, or a combination of these. Next, the gas, fumes, steam, mist, or combinations thereof are allowed to flow through the aperture arrangement 38 in the cooking surface 36 to the food product 12 on the cooking surface 36. The food product 12 can then be removed from the cooking surface 36, and the single-use tray assembly 10 is discarded.

The above description represents examples. Many embodiments can be made.

## Claims

1. A single-use pre-filled tray assembly comprising:
(a) a first tray having a base with a heating surface and a surrounding wall;
(b) a volume of an aromatic material positioned on the base of the first tray; and
(c) a second tray non-removably secured to the first tray over the base and the volume of aromatic material;
(i) the second tray having a cooking surface; and
(ii) the cooking surface defining an aperture arrangement to permit the flow of gases from the aromatic material through the cooking surface upon application of heat to the heating surface of the first tray.

2. A tray assembly according to claim 1 wherein the second tray includes a wall surrounding the cooking surface; the second tray being nested within the first tray.

3. A tray assembly according to claim 2 wherein the second tray wall is non-removably connected to the surrounding wall of the first tray.

4. A tray assembly according to claim 3 wherein the second tray wall is crimped to the surrounding wall of the first tray.

5. A tray assembly according to claim 2 wherein the second tray wall is non-orthogonally angled relative to the cooking surface.

6. A tray assembly according to any one of claims 1-5 wherein the aromatic material comprises wood chips.

7. A tray assembly according to any one of claims 1-5 wherein the aromatic material comprises spices or herbs or mixtures thereof.

8. A tray assembly according to any one of claims 1-5 wherein the aromatic material comprises natural or artificial flavorings or mixtures thereof.

9. A tray assembly according to any one of claims 1-8 wherein the aperture arrangement in the second tray includes a plurality of spaced holes in the cooking surface.

10. A tray assembly according to any one of claims 1-9 wherein the tray assembly is disposable, with the first tray and second tray each comprising foil trays.

11. A tray assembly according to any one of claims 1-10 further comprising:
(a) a food product oriented on the cooking surface of the second tray; and
(b) a removable packaging cover trapping the food product on the second tray.

12. A tray assembly according to any one of claims 1-11 wherein the first tray is non-porous.

13. A tray assembly according to any one of claims 1-12 further comprising a removable lid spaced from and covering the cooking surface.

14. A packaged food product comprising a single-use pre-filled tray assembly according to any one of claims 1-10; the packaged food product including:
(a) a food product oriented on the cooking surface of the second tray; and
(b) a removable packaging cover trapping the food product on the second tray.

15. A method of making a tray assembly; the method comprising:
(a) placing an aromatic material in a first tray;
(b) orienting a second tray over the aromatic material in the first tray; the second tray having a cooking surface defining an aperture arrangement therein; and
(c) securing the second tray to the first tray to ensure the first tray and second tray are non-separable.

16. A method according to claim 15 wherein the step of securing includes crimping together the first tray and the second tray.

17. A method according to any one of claims 15 and 16 wherein the step of placing an aromatic material includes placing in the first tray at least one of:
(i) wood chips, or (ii) spices or herbs or mixtures thereof, or (iii) artificial or natural flavorings or mixtures thereof.

18. A method according to any one of claims 15-17 further including:
(a) orienting a food product on the cooking surface of the second tray; and
(b) orienting a removable and disposable cover over the food product to trap the food product against the cooking surface.

19. A method of flavoring a food product; the method including:
(a) placing a food product onto a cooking surface of a single-use tray assembly; the cooking surface defining an aperture arrangement therethrough; the tray assembly including a base arrangement under the cooking surface and an aromatic material being within the base arrangement;
(b) heating the tray assembly to heat the aromatic material and cause the aromatic material to give off fumes;
(c) allowing the fumes to flow through the aperture arrangement in the cooking surface to the food product on the cooking surface;
(d) removing the food product from the cooking surface; and
(e) discarding the single-use tray assembly.
(c) a second tray non-removably secured to the first tray over the base and the volume of aromatic material;
